# FASCICULE DE BREVET EUROPEEN

(11) **EP 1 476 960 B1**
(45) Date de publication et mention de la délivrance du brevet: **28.03.2007**
(21) Numéro de dépôt: 03717389.5
(22) Date de dépôt: 11.02.2003
(51) Int. Cl.: H04B 7/06

(54) **PROCEDE D'EMISSION EN DIVERSITE DANS UN SYSTEME DE RADIOCOMMUNICATIONS MOBILES**
VERFAHREN MIT SENDER-DIVERSITÄT IN EINEM MOBILFUNKKOMMUNIKATIONSSYSTEM
METHOD FOR MULTIPLE BROADCASTING IN A MOBILE RADIOCOMMUNICATION SYSTEM

(30) Priorité: 11.02.2002 FR 0201623
(43) Date de publication de la demande: 17.11.2004
(73) Titulaire: Evolium S.A.S., 75008 Paris (FR)
(72) Inventeur: AGIN, Pascal, F-94370 Sucy en Brie (FR)
(74) Mandataire: El Manouni, Josiane
(86) Numéro de dépôt international: PCT/FR2003/000419
(87) Numéro de publication internationale: WO 2003/069801

(56) Documents cités:
- WO-A-01/78254
- US-A- 5 960 330
- US-A- 6 131 016
- GORE D A ET AL: "SELECTING AN OPTIMAL SET OF TRANSMIT ANTENNAS FOR A LOW RANK MATRIXCHANNEL" 2000 IEEE INTERNATIONAL CONFERENCE ON ACOUSTICS, SPEECH, AND SIGNAL PROCESSING. PROCEEDINGS. (ICASSP). ISTANBUL, TURKEY, JUNE 5-9, 2000, IEEE INTERNATIONAL CONFERENCE ON ACOUSTICS, SPEECH, AND SIGNAL PROCESSING (ICASSP), NEW YORK, NY: IEEE, US, vol. 5 OF 6, 5 juin 2000 (2000-06-05), pages 2785-2788, XP001035763 ISBN: 0-7803-6294-2

## Description

La présente invention concerne d'une manière générale les systèmes de radiocommunications mobiles.

La présente invention est notamment applicable aux systèmes dits à accès multiple à répartition par les codes, ou AMRC, ou encore CDMA (pour "Code Division Multiple Access" en anglais).

La présente invention est ainsi notamment applicable aux systèmes dits de troisième génération, tels que notamment le système UMTS (pour "Universal Mobile Telecommunication System").

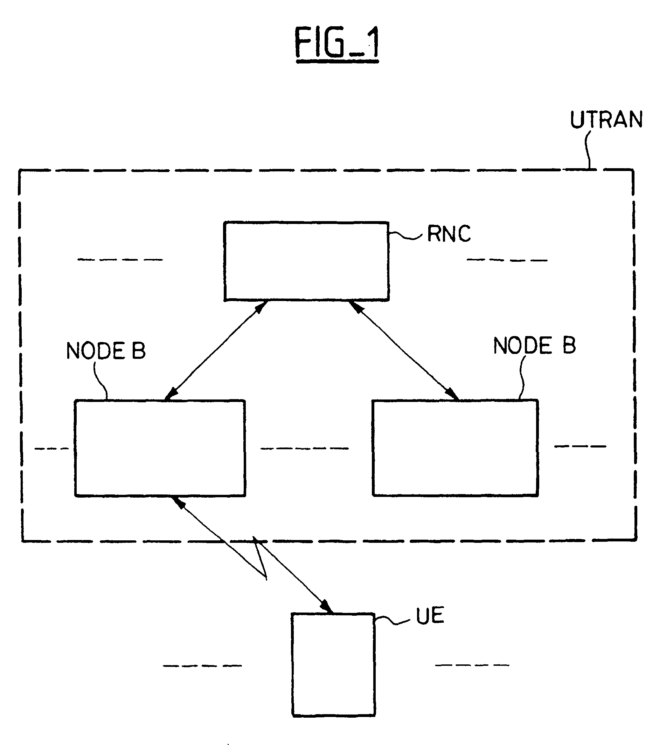

D'une manière générale, un système de radiocommunications mobiles comporte, comme rappelé sur la figure 1, les différentes entités suivantes: des stations mobiles (appelées aussi équipements utilisateurs, ou UE, pour "User Equipment" dans le système UMTS), des stations de base (appelées aussi "Node B" dans l'UMTS), et des contrôleurs de stations de base (appelés aussi RNC, pour "Radio Network Controller" dans l'UMTS). L'ensemble formé par les « Node B » et les RNC est aussi appelé UTRAN, pour "UMTS Terrestrial Radio Access Network", ou plus généralement réseau d'accès radio (ou RAN, pour « Radio Access Network »).

D'une manière générale, ces systèmes font l'objet de normalisation, et pour plus d'informations on pourra se référer aux normes correspondantes, publiées par les organismes de normalisation correspondants.

D'une manière générale, dans ces systèmes, un des objectifs est d'augmenter les performances, c'est-à-dire notamment augmenter la capacité et/ou améliorer la qualité de service.

Des techniques couramment utilisées dans ces systèmes sont les techniques dites de diversité d'antennes, destinées notamment à lutter contre les phénomènes dits de « fast fading » (en anglais) sur le canal radio. On distingue généralement les techniques de diversité d'antennes de réception et les techniques de diversité d'antennes d'émission.

Les techniques de diversité d'antennes de réception consistent à prévoir plusieurs antennes de réception. Les signaux reçus sur ces différentes antennes peuvent alors être traités selon des traitements permettant d'optimiser la qualité de l'estimation des données reçues. Ces techniques sont couramment utilisées dans les stations de base, pour améliorer les performances de transmission dans le sens montant (ou sens de transmission des stations mobiles vers les stations de base). Elles sont cependant difficiles à utiliser dans le sens descendant (ou sens de transmission des stations de base vers les stations mobiles) car le fait d'équiper les stations mobiles de plusieurs antennes de réception les rendrait trop complexes et/ou trop coûteuses. C'est pourquoi, pour améliorer les performances (notamment augmenter la capacité) dans le sens descendant, on utilise plutôt les techniques de diversité d'antennes d'émission.

Les techniques de diversité d'antennes d'émission consistent à prévoir plusieurs antennes d'émission. On distingue généralement:
- les techniques de diversité d'antennes d'émission dites en boucle ouverte (ou « open loop » en anglais) qui ne nécessitent pas d'information en retour du récepteur,
- les techniques de diversité d'antennes d'émission dites en boucle fermée (ou « closed loop » en anglais) qui nécessitent des informations en retour du récepteur.

Plusieurs techniques de diversité d'antennes d'émission peuvent être prévues dans un même système. Dans ce qui suit on considérera plus particulièrement l'exemple du système UMTS, bien que l'invention ne soit pas limitée à cet exemple. Ainsi, dans le système UMTS, dans un mode appelé FDD (pour « Frequency Domain Duplex »), les techniques suivantes ont été normalisées pour deux antennes d'émission:
- la technique STTD (pour « Space Time Transmit Diversity ») dans laquelle un codage dans le temps et dans l'espace permet au récepteur de démoduler les données sans complexité additionnelle par rapport au cas de non diversité; cette technique peut être utilisée pour tous les canaux physiques descendants, à l'exception des canaux de synchronisation,
- la technique TSTD (pour « Time Switch Transmit Diversity ») qui consiste à émettre le signal alternativement sur chaque antenne, à chaque intervalle de temps; cette technique est utilisée seulement pour les canaux de synchronisation descendants,
- la technique de diversité d'antennes d'émission en boucle fermée, dans laquelle la station mobile transmet périodiquement à la station de base
- des informations de commande (appelées aussi « weight information » en anglais) permettant d'ajuster la phase et/ou l'amplitude des signaux émis sur les différentes antennes, de manière à optimiser les performances en réception; deux modes sont en l'occurrence possibles: un premier mode (ou mode 1) dans lequel on ajuste la phase relative des signaux transmis sur les deux antennes, et un deuxième mode (ou mode 2) dans lequel on ajuste l'amplitude et la phase relative des signaux transmis sur les deux antennes; cette technique peut être utilisée pour les canaux physiques dédiés ou DPCH (pour « Dedicated Physical Channel ») ou pour les canaux physiques partagés ou PDSCH (pour «Physical Downlink Shared Channel »).

Des exemples de systèmes utilisant la technique de diversité d'antennes d'émission sont décrits dans les documents US-A-6 131 016, WO 01/78254, US-A-5 960 330, WO 99/59263.

Il est aussi possible de n'utiliser aucune technique de diversité d'antenne d'émission. Ainsi, dans l'UMTS, quatre modes appelés aussi modes de diversité d'émission (ou « transmit diversity mode» en anglais) sont possibles pour la transmission de canaux physiques dédiés (ou canaux DPCH) dans le sens descendant :
- le mode sans diversité,
- le mode STTD,
- le mode 1 en boucle fermée,
- le mode 2 en boucle fermée.

Le mode de diversité d'émission est sélectionné indépendamment pour chaque station mobile. Ainsi, dans chaque cellule, il peut y avoir des stations mobiles (dites aussi stations mobiles sans diversité) pour lesquelles aucune technique de diversité d'antennes d'émission n'est utilisée, et des stations mobiles (dites aussi stations mobiles avec diversité) pour lesquelles une technique de diversité d'antennes d'émission est utilisée, qui peut être la technique STTD, ou un des deux modes possibles pour la technique en boucle fermée.

La sélection du mode de diversité à utiliser pour chaque station mobile est généralement effectuée par le contrôleur de stations de base (ou RNC), généralement en fonction des possibilités de la station de base (ou Node B ) et de la station mobile (ou UE), et en fonction de critères radio (par exemple, le mode STTD permet habituellement d'obtenir de meilleures performances qu'un des deux modes en boucle fermée lorsque la station mobile est dans une configuration de transmission dite en macro-diversité (ou « soft-handover » en anglais) selon laquelle elle est connectée simultanément à plusieurs stations de base).

En outre, dans ces systèmes, un canal physique particulier appelé canal pilote commun est diffusé par chaque station de base, notamment pour permettre aux stations mobiles d'effectuer une estimation de canal radio prélablement à l'estimation de données reçues par ce canal radio. Dans l'UMTS, ce canal pilote commun est aussi appelé canal pilote commun primaire ou P-CPICH (pour « Primary-Common Pilot Channel »).

Pour permettre la diversité d'antennes d'émission dans une cellule, le canal P-CPICH doit être transmis sur chacune des deux antennes d'émission, de façon à permettre une estimation du canal radio reliant chacune des deux antennes d'émission à l'antenne de réception.

Dans ce cas:
- le canal P-CPICH est transmis sur une première antenne (habituellement appelée antenne de non-diversité) exactement de la même façon que lorque la diversité d'antennes d'émission n'est pas utilisée dans la cellule (mais éventuellement avec une puissance inférieure),
- de plus le canal P-CPICH est transmis sur une deuxième antenne (habituellement appelée antenne de diversité) pour être utilisé par toutes les stations mobiles avec diversité (c'est-à-dire utilisant la technique STTD ou un des deux modes possibles pour la technique en boucle fermée).

Pour permettre aux stations mobiles de séparer les canaux P-CPICH transmis sur les deux antennes d'émission, un motif de bits différent est utilisé (c'est-à-dire la séquence de bits transmise sur ces deux canaux n'est pas la même pour chaque antenne). On peut se référer par exemple à la spécification 3GPP TS 25.211, V3.8.0 section 5.3.3.1.

Le canal physique dédié qui transporte les informations de trafic utiles pour une station mobile, ou canal DPCH (pour « Dedicated Physical Channel ») est transmis vers cette station mobile soit par l'antenne de non-diversité dans le cas de station mobile sans diversité, soit par les deux antennes (de diversité et de non-diversité) dans le cas contraire.

Ainsi que l'a observé le demandeur, un problème se pose alors, qui peut être exposé de la manière suivante.

Puisque dans une cellule il peut alors y avoir des stations mobiles avec diversité et des stations mobile sans diversité, une puissance beaucoup plus importante peut alors être transmise par l'antenne de non-diversité que par l'antenne de diversité (la différence étant due aux stations mobiles qui n'utilisent aucune technique de diversité).

Une telle configuration n'est pas du tout optimale en termes de performance. En effet, dans une implémentation habituelle, il y a un amplificateur de puissance (ou PA, pour « Power Amplifier » en anglais) pour chaque antenne, puisqu'un signal différent est transmis sur chaque antenne. Chaque amplificateur de puissance amplifie tout le signal transmis sur son antenne (incluant tous les canaux communs et canaux physiques dédiés aux différents utilisateurs, dans le sens descendant). Afin d'éviter une distorsion du signal transmis (et donc afin d'éviter une dégradation de performance), la puissance du signal transmis doit être en dessous d'une valeur maximale (typiquement 43 dBm) au dessus de laquelle l'amplificateur de puissance n'est plus linéaire (c'est-à-dire au-dessus de laquelle l'amplificateur distord le signal). Donc, la puissance est limitée à une valeur maximale pour chaque antenne séparément.

Par conséquent, si toutes les stations mobiles sans diversité sont affectées à l'antenne de non-diversité, la valeur de puissance maximale de cette antenne sera atteinte plus tôt que pour l'antenne de diversité et ceci limitera plus tôt la capacité du système (en effet lorsque la valeur de puissance maximale est atteinte, aucun utilisateur ne peut plus être accepté dans la cellule).

Ainsi que l'a également observé le demandeur, le mode sans diversité n'est qu'un cas particulier de mode de diversité à « n » antennes d'émission (avec 1 ≤ n < N, où N est le nombre total d'antennes d'émission prévues) ce cas particulier correspondant à une valeur de « n » égale à 1. De façon similaire, dans le cas où il pourrait y avoir dans une même cellule des stations mobiles dans un mode de diversité à « n » antennes et des stations mobiles dans un mode de diversité à N antennes, si toutes les stations mobiles dans un mode de diversité à « n » antennes d'émission étaient affectées aux mêmes « n » antennes, la valeur de puissance maximale de ces « n » antennes serait atteinte plus tôt que celle des autres antennes, ce qui limiterait plus tôt la capacité du système.

La présente invention a notamment pour but d'éviter de tels inconvénients.

Plus généralement, la présente invention a pour but d'améliorer les performances de tels systèmes. Notamment la présente invention permet d'augmenter de manière significative la capacité de ces systèmes, et ce en outre sans introduction de fonctionnalité additionnelle complexe ou coûteuse.

Un des objets de la présente invention est un procédé pour améliorer les performances d'un système de radiocommunications mobiles à N antennes d'émission (avec N > 1) dans lequel différents modes de diversité d'antennes d'émission sont possibles, incluant au moins un mode dit à « n » antennes d'émission (avec 1 ≤ n < N), ledit procédé comportant une étape de sélection de « n » antennes d'émission parmi N pour la transmission dans un mode à « n » antennes d'émission.

Suivant une autre caractéristique, le procédé comporte une étape selon laquelle le réseau sélectionne « n » antennes d'émission parmi N (avec 1 ≤n < N) pour la transmission vers une station mobile dans un mode à « n » antennes d'émission.

Suivant une autre caractéristique, le procédé comporte en outre une étape selon laquelle le réseau signale à une station mobile « n » antennes d'émission sélectionnées parmi N (avec 1 ≤ n < N) pour la transmission vers cette station mobile dans un mode à « n » antennes d'émission.

Suivant une autre caractéristique, ladite sélection de « n » antennes d'émission parmi N (avec 1 ≤n < N) est effectuée de manière à répartir le mieux possible les puissances émises sur les différentes antennes d'émission.

Suivant une autre caractéristique, un canal pilote commun étant associé à chaque antenne d'émission, ledit procédé comporte une étape selon laquelle une station mobile sélectionne le canal pilote commun associé à une antenne d'émission sélectionnée signalée par le réseau.

Suivant une autre caractéristique, ladite sélection correspond à une sélection d'une antenne d'émission parmi N, pour la transmission dans un mode dit sans diversité.

Un autre objet de l'invention est une station de base pour système de radiocommunications mobiles à N antennes d'émission (avec N > 1) dans lequel différents modes de diversité d'antennes d'émission sont possibles, incluant au moins un mode dit à « n » antennes d'émission (avec 1 ≤n < N) , ladite station de base comportant des moyens pour sélectionner « n » antennes d'émission parmi N pour la transmission vers une station mobile dans un mode à « n » antennes d'émission.

Suivant une autre caractéristique, la station de base comporte des moyens pour sélectionner « n » antennes d'émission parmi N (avec 1 ≤n < N), de manière à répartir le mieux possible les puissances émises sur les différentes antennes d'émission.

Suivant une autre caractéristique, la station de base comporte en outre des moyens pour signaler à la station mobile « n » antennes d'émission ainsi sélectionnées parmi N (avec 1 ≤n < N).

Suivant une autre caractéristique, la station de base comporte des moyens pour signaler à un contrôleur de stations de base « n » antennes d'émission ainsi sélectionnées parmi N (avec 1 ≤ n < N).

Suivant une autre caractéristique, ladite sélection correspond à une sélection d'une antenne d'émission parmi N, pour la transmission dans un mode dit sans diversité.

Un autre objet de l'invention est un contrôleur de stations de base pour système de radiocommunications mobiles à N antennes d'émission (avec N > 1) dans lequel différents modes de diversité d'antennes d'émission sont possibles, incluant au moins un mode dit à « n » antennes d'émission (avec 1 ≤ n < N), ledit contrôleur de stations de base comportant:
- des moyens pour recevoir d'une station de base une information relative à « n » antennes d'émission sélectionnées parmi N par cette station de base, pour la transmission vers une station mobile dans un mode à « n » antennes d'émission,
- des moyens pour signaler à la station mobile « n » antennes d'émission parmi N ainsi sélectionnées.

Un autre objet de l'invention est un contrôleur de stations de base pour système de radiocommunications mobiles à N antennes d'émission (avec N > 1) dans lequel différents modes de diversité d'antennes d'émission sont possibles, incluant au moins un mode dit à « n » antennes d'émission (avec 1 ≤ n < N), ledit contrôleur de stations de base comportant des moyens pour sélectionner « n » antennes d'émission parmi N pour la transmission vers une station mobile dans un mode à « n » antennes d'émission.

Suivant une autre caractéristique, le contrôleur de stations de base comporte des moyens pour sélectionner « n » antennes d'émission parmi N (avec 1 ≤ n < N), de manière à répartir le mieux possible les puissances émises sur les différentes antennes d'émission.

Suivant une autre caractéristique, le contrôleur de stations de base comporte en outre des moyens pour signaler à la station mobile « n » antennes d'émission ainsi sélectionnées.

Suivant une autre caractéristique, ladite sélection correspond à une sélection d'une antenne d'émission parmi N, pour la transmission dans un mode dit sans diversité.

Un autre objet de l'invention est une station mobile pour système de radiocommunications mobiles à N antennes d'émission (avec N > 1) dans lequel différents modes de diversité d'antennes d'émission sont possibles, incluant au moins un mode dit à « n » antennes d'émission (avec 1 ≤ n < N), ladite station mobile comportant des moyens pour recevoir du réseau une information relative à « n » antennes d'émission sélectionnées parmi N (avec 1 ≤ n < N) pour la transmission vers cette station mobile dans un mode à « n » antennes d'émission.

Suivant une autre caractéristique, la station mobile comporte des moyens pour sélectionner un canal pilote commun associé à une antenne d'émission sélectionnée signalée par le réseau.

Suivant une autre caractéristique, ladite sélection correspond à une sélection d'une antenne d'émission parmi N, pour la transmission dans un mode dit sans diversité.

Un autre objet de la présente invention est un système de radiocommunication mobiles comportant au moins une telle station de base, et/ou au moins un tel contrôleur de stations de base, et/ou au moins une telle station mobile.

D'autres objets et caractéristiques de la présente invention apparaîtront à la lecture de la description suivante d'exemples de réalisation, faite en relation avec les dessins ci-annexés dans lesquels:
- la figure 1 rappelle l'architecture générale d'un système de radiocommunications mobiles tel que notamment le système UMTS,
- les figures 2 et 3 sont destinées à illustrer des exemples de moyens à prévoir, respectivement en émission et en réception, pour mettre en oeuvre la présente invention, dans le sens descendant, dans un tel système,
- la figure 4 est destinée à illustrer un premier exemple de mise en oeuvre de l'invention dans un tel système,
- la figure 5 est destinée à illustrer un deuxième exemple de mise en oeuvre de l'invention dans un tel système,
- la figure 6 est destinée à illustrer un troisième exemple de mise en oeuvre de l'invention dans un tel système.

Un des objectifs de la présente invention est donc d'améliorer les performances de tels systèmes à N antennes d'émission (avec N > 1) dans lesquels différents modes de diversité d'antennes d'émission sont possibles, incluant au moins un mode dit à « n » antennes d'émission (avec 1 ≤ n < N).

Dans ce qui suit, on considère plus particulièrement, à titre d'exemple, le cas des valeurs N=2 et n=1, correspondant à un système à deux antennes d'émission dans lequel est prévu un mode sans diversité, correspondant ainsi notamment au cas de liaison descendante dans un système tel que l'UMTS.

D'une manière générale, l'invention prévoit que n'importe laquelle des antennes d'émission peut être utilisée dans le mode sans diversité.

Par exemple, dans le cas rappelé précédemment de deux antennes d'émission, n'importe laquelle de l'antenne de diversité et de l'antenne de non diversité peut être utilisée dans le mode sans diversité.

Par exemple, dans une cellule avec 40 stations mobiles utilisant le même service et dans le mode sans diversité, l'antenne de non diversité serait utilisée pour 20 stations mobiles et l'antenne de diversité serait utilisée pour 20 autres stations mobiles. Cette répartition des stations mobiles entre les différentes antennes d'émission pourrait être différente dans le cas de stations mobiles n'utilisant pas le même service (parce que ces stations mobiles ne nécessiteraient pas la même puissance d'émission) mais on comprend cependant que l'idée reste la même.

D'une manière générale, on peut noter que le type de situation visée par la présente invention (à savoir une situation dans laquelle certaines stations mobiles sont dans le mode avec diversité, alors que d'autres stations mobiles sont dans le mode sans diversité) peut se produire pour différentes raisons, telles par exemple:
- certaines stations mobiles pourraient ne supporter aucun mode avec diversité (cette raison étant cependant très improbable dans un système tel que l'UMTS où les stations mobiles doivent supporter tous les modes de diversité d'émission spécifiés par la norme),
- dans certains cas, les performances peuvent être meilleures dans le mode sans diversité que dans un mode avec diversité ; ainsi le mode avec diversité en boucle fermée donne habituellement de moins bonnes performances que le mode sans diversité lorsque la vitesse de la station mobile est grande ou dans le cas de station mobile en configuration de « soft handover »; le réseau pourrait alors désactiver le mode avec diversité pour des stations mobiles se trouvant dans ces conditions et l'activer pour d'autres stations mobiles,
- certaines stations mobiles peuvent être dans une configuration de macro-diversité (ou « soft handover ») avec au moins une station de base qui ne supporte pas la diversité d'antennes d'émission; dans ce cas, il peut être prévu que ces stations mobiles n'utilisent pas la diversité d'antennes d'émission, alors que les stations mobiles qui sont connectées seulement à des stations de base qui supportent la diversité d'antennes d'émission pourraient l'utiliser.

Contrairement aux techniques antérieures rappelées précédemment, l'invention ne prévoit donc pas d'utiliser toujours la même antenne d'émission (par exemple, dans le cas rappelé précédemment de deux antennes d'émission, l'antenne de non diversité) pour la transmission dans le mode sans diversité d'antennes d'émission.

En d'autres termes, contrairement aux techniques antérieures rappelées précédemment, l'invention prévoit d'utiliser une étape de sélection d'une antenne d'émission pour la transmission dans le mode sans diversité d'antennes d'émission.

D'une manière générale, la sélection d'une antenne d'émission peut être effectuée indépendamment pour chaque canal à transmettre dans le mode sans diversité.

Le terme canal est utilisé ici pour désigner des ressources allouées pour la transmission d'informations, telles que la sélection d'une antenne d'émission peut être effectuée indépendamment pour chaque canal à transmettre. Ce terme peut donc avoir la même signification que celle qu'il a habituellement dans ces systèmes. Notamment, dans l'application de l'invention à UMTS, il peut s'agir de canal physique dédié ou DPCH (pour « Dedicated Physical Channel »), tel que défini dans les spécifications de l'UMTS.

Dans le sens descendant, une telle sélection peut ainsi être effectuée indépendamment pour chaque station mobile vers laquelle un ou plusieurs canaux (tels que notamment des canaux DPCH(s) dans l'UMTS) sont à transmettre dans le mode sans diversité.

Dans le sens descendant, l'invention prévoit ainsi d'utiliser une étape selon laquelle le réseau sélectionne une antenne d'émission pour la transmission vers une station mobile dans le mode sans diversité d'antennes d'émission.

Une autre étape peut en outre être prévue, selon laquelle le réseau signale à une station mobile l'antenne d'émission sélectionnée pour la transmission vers cette station mobile dans le mode sans diversité d'antennes d'émission.

Avantageusement, ladite sélection d'antenne d'émission est effectuée de manière à répartir le mieux possible les puissances émises sur les différentes antennes d'émission.

Dans l'exemple considéré du système UMTS, avec la norme actuelle, une station mobile dans le mode sans diversité suppose que le ou les canaux dédiés (ou DPCH(s)) qui lui sont transmis, sont transmis sur une prédéterminée des deux antennes, dite aussi antenne de non diversité, et cette station mobile effectue alors une estimation de canal radio à partir du canal P-CPICH émis sur cette antenne.

Cependant, si le ou les canaux DPCH(s) descendants étaient transmis sur l'antenne de diversité, l'estimation de canal radio devrait être effectuée à partir du canal P-CPICH transmis sur l'antenne de diversité.

Dans ce cas, pour permettre comme le prévoit la présente invention que n'importe laquelle de ces deux antennes (antenne de diversité et antenne de non diversité) puisse être utilisée dans le mode sans diversité, la station mobile est informée de l'antenne d'émission utilisée par le Node B, de façon à pouvoir effectuer tout traitement (tel que notamment une estimation de canal radio) sur le canal P-CPICH correspondant. On notera que dans un système tel que notamment l'UMTS, un traitement tel que notamment une estimation de canal radio pourrait aussi être effectuée à partir du canal appelé canal pilote commun secondaire ou S-CPICH (pour « Secondary - Common Pilot Channel ») .

La signalisation de l'antenne d'émission ou des antennes d'emission utilisées pour une station mobile donnée a pour but de permettre à cette station mobile d'effectuer tout traitement qui suppose de connaitre l'antenne d'émission utilisée. C'est entre autres le cas des traitements effectues sur le P-CPICH ou le S-CPICH car ces deux canaux permettent de transmettre des bits connus du récepteur, sachant que la séquence de bits transmis dépend de l'antenne d'émission.

En d'autres termes, un canal pilote commun étant associé à chaque antenne d'émission, l'invention prévoit en outre une étape selon laquelle une station mobile sélectionne le canal pilote commun associé à l'antenne d'émission signalée par le réseau. D'une manière générale, différentes possibilités peuvent être utilisées pour associer un canal pilote commun à une antenne d'émission. Par exemple, un canal pilote commun peut utiliser des ressources de transmission particulières, associées à une antenne d'émission. Ou encore, dans le cas où les mêmes ressources sont attribuées pour la transmission de ce canal par les différentes antennes, un canal pilote commun peut transporter des informations (ou séquence de bits) particulières, associées à une antenne d'émission (cette dernière possibilité correspondant plus particulièrement au cas de l'UMTS, comme indiqué précédemment).

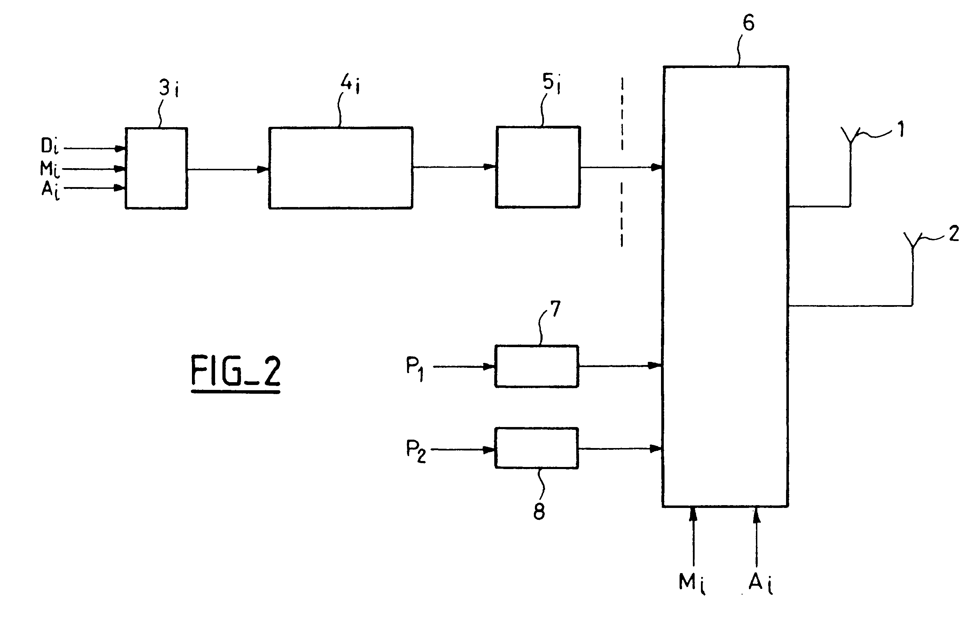

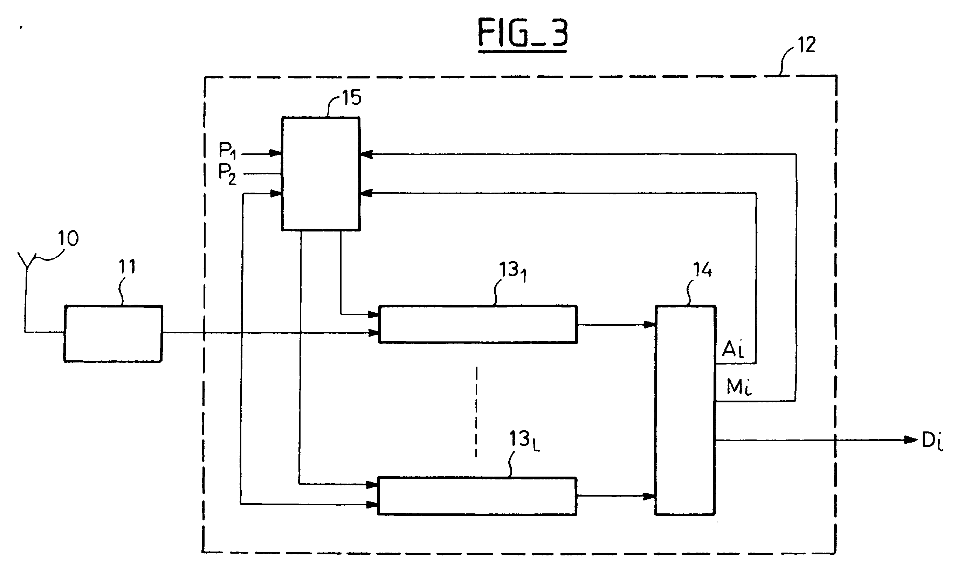

Les figures 2 et 3 illustrent des exemples de moyens à prévoir, respectivement en émission et en réception, pour mettre en oeuvre l'invention dans le sens de transmission descendant, du réseau vers les stations mobiles. On notera que ces figures ne représentent que très schématiquement de tels moyens, seulement dans la mesure nécessaire à la compréhension de la présente invention, et sans entrer dans le détail des procédés ou protocoles de communication dans ces systèmes, ou dans le détail de la répartition des fonctions entre différentes entités constitutives de tels systèmes.

A titre d'exemple (correspondant plus particulièrement au cas de l'UMTS) le nombre d'antennes d'émission est égal à deux, ces deux antennes étant notées 1 et 2 sur la figure 2. L'invention n'est bien sûr pas limitée à un tel exemple.

Le schéma illustré sur la figure 2 comporte, pour chaque station mobile UEi vers laquelle le réseau peut transmettre des données:
- des moyens 3i pour mettre les différentes informations à transmettre vers la station mobile dans un format approprié pour leur transmission,
- des moyens 4i de traitement en émission, incluant notamment des traitements tels que codage-canal, entrelacement, adaptation de débit, ...etc.,
- des moyens d'étalement 5i, recevant au moins un code d'étalement correspondant à au moins un canal physique dédié, alloué à la station mobile considérée.

Les différentes informations à transmettre vers la station mobile mobile UEi incluent notamment:
- les données utiles, notées Di, à transmettre à cette station mobile,
- le mode de diversité, noté Mi, sélectionné pour cette station mobile,
- l'antenne d'émission, notée Ai, sélectionnée pour cette station mobile, dans le cas où le mode de diversité sélectionné est le mode sans diversité.

Le schéma illustré sur la figure 2 comporte en outre des moyens d'émission radio 6 permettant, à partir des différents signaux issus de différents moyens d'étalement tels que 5i, correspondant à différentes stations mobiles UEi, de générer des signaux radio à appliquer à l'une et/ou l'autre des différentes antennes d'émission, suivant le mode de diversité Mi sélectionné pour chaque station mobile UEi, et suivant l'antenne d'émission Ai sélectionnée pour chaque station mobile UEi dans le cas de mode sans diversité.

Le schéma illustré sur la figure 2 comporte en outre des moyens d'étalement notés 7 et 8 recevant un code d'étalement alloué pour la transmission d'un canal pilote commun sur chaque antenne (les motifs de bits transmis sur ce canal pilote commun étant différents pour chaque antenne et notés respectivement P1 et P2). Les signaux résultants sont également appliqués aux moyens d'émission radio 6, qui génèrent des signaux radio correspondants à appliquer aux antennes d'émission.

Dans l'exemple illustré sur la figure 2, l'information Ai relative à l'antenne d'émission sélectionnée pour une station mobile UEi dans le mode sans diversité est utilisée par les moyens d'émission radio 6 pour appliquer les signaux radio correspondants à l'antenne d'émission sélectionnée, comme expliqué précédemment. Dans l'exemple illustré sur la figure 2, l'information Ai est par ailleurs signalée à la station mobile, pour permettre à celle-ci de sélectionner un canal pilote associé à l'antenne d'émission sélectionnée (également comme expliqué précédemment).

Les autres fonctions réalisées selon le schéma de la figure 2 sont bien connues de l'homme du métier et ne nécessitent donc pas d'être re-décrites ici de manière plus détaillée.

Le schéma illustré sur la figure 3 comporte:
- des moyens de réception radio 11, connectés à une antenne de réception 10,
- des moyens 12 d'estimation de données reçues.

Le traitement mis en oeuvre dans les moyens 12 correspond en l'occurrence à celui mis en oeuvre dans un récepteur de type Rake. Un récepteur de type Rake comporte un ensemble de L doigts (ou "fingers" en anglais) notés 13₁ à 13_{L}, et des moyens 14 de combinaison des signaux issus de ces différents doigts. Chaque doigt permet de désétaler le signal reçu selon l'un des différents trajets pris en compte, les différents trajets pris en compte étant déterminés par des moyens 15 d'estimation de réponse impulsionnelle de canal radio. Les moyens 14 permettent de combiner les signaux désétalés correspondant aux différents trajets considérés, selon un traitement destiné à optimiser la qualité de l'estimation des données reçues Di.

Les moyens 15 d'estimation de réponse impulsionnelle de canal radio permettent de déterminer la réponse impulsionnelle de l'un et/ou l'autre des canaux radio reliant chacune des antennes d'émission à l'antenne de réception, suivant le mode de diversité d'émission Mi sélectionné pour la station mobile UEi considérée, et dans le cas de mode sans diversité, suivant l'antenne d'émission Ai sélectionnée. Le mode de diversité sélectionné Mi et l'antenne d'émission sélectionnée Ai sont signalés par le réseau à la station mobile, et restitués en réception par les moyens 14. L'information Ai est utilisée par la station mobile (dans les moyens notés 15 dans l'exemple illustré sur la figure 3) pour sélectionner un canal pilote commun correspondant à l'antenne d'émission Ai sélectionnée dans le cas de mode sans diversité, notamment afin d'effectuer une estimation du canal radio correspondant, comme expliqué précédemment.

Les autres fonctions réalisées selon l'exemple de la figure 3 sont bien connues de l'homme du métier et ne nécessitent donc pas d'être re-décrites ici de manière plus détaillée.

On décrit maintenant différents exemples possibles de mise en oeuvre de l'invention dans un tel système.

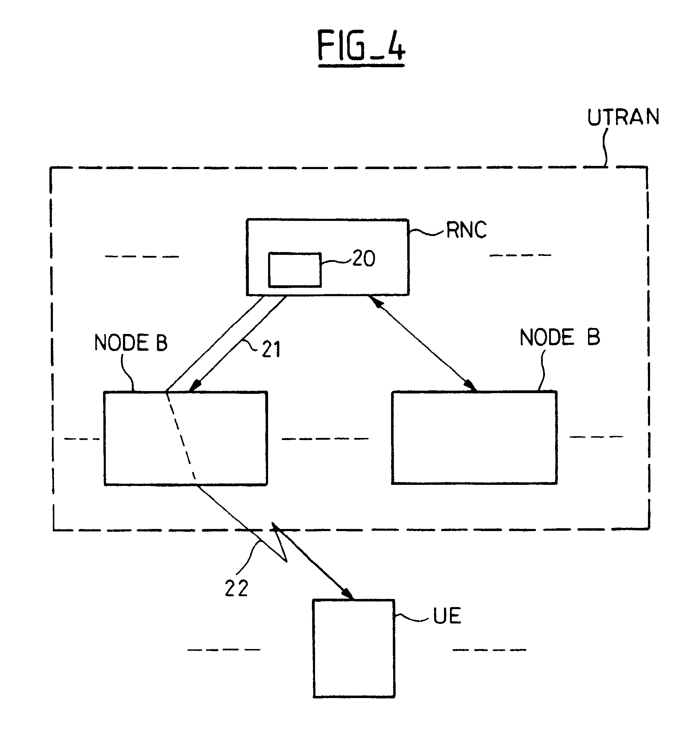

Suivant un premier exemple, qui peut être un exemple de réalisation préféré, l'antenne d'émission allouée dans le mode sans diversité est sélectionnée par le RNC, comme illustré en 20 sur la figure 4, et signalée à la fois à l'UE et au Node B, comme illustré respectivement en 21 et 22 sur la figure 4.

La signalisation de RNC vers UE utilise avantageusement un message de signalisation prévu selon le protocole de communication entre RNC et UE, ou protocole RRC (pour « Radio Resource Control »). La signalisation de RNC vers Node B utilise avantageusement un message de signalisation prévu selon le protocole de communication entre RNC et Node B, ou protocole NBAP (pour « Node B Application Part »).

La signalisation de l'antenne d'émission allouée peut par exemple être obtenue en ajoutant un élément d'information, ou IE (pour « Information Element » en anglais) ayant deux valeurs possibles (correspondant chacune à une des antennes d'émission) à tout ou partie des messages existants qui permettent de fixer ou de changer le mode de diversité d'émission (c'est-à-dire les messages qui contiennent l'IE « Diversity Mode »).

Pour le protocole NBAP (pour « Node B Application Part ») tel que défini dans la spécification 3G TS 25.433, il s'agit notamment des messages suivants:
- Radio Link Setup Request
- Radio Link Reconfiguration Prepare.

Plus généralement, il peut s'agir de tout message permettant à un équipement tel qu'un contrôleur de stations de base ayant une fonction de contrôle de ressources radio, de signaler à une station de base qu'il contrôle, tout changement dans les réservations de ressources radio dans cette station de base, notamment du fait de l'établissement ou de la reconfiguration de lien radio (ou « radio link » en anglais) entre cette station de base et une station mobile.

Pour le protocole RRC (pour « Radio Resource Control ») tel que défini dans la spécification 3G TS 25.331, il s'agit notamment des messages:
- Active Set Update
- Cell Update Confirm
- Handover to UTRAN Command
- Physical Channel Reconfiguration
- Radio Bearer Reconfiguration
- Radio Bearer Release
- RRC Connection Setup
- Transport Channel Reconfiguration.

Plus généralement, il peut s'agir de tout message permettant à un équipement tel qu'un contrôleur de stations de base ayant une fonction de contrôle de ressources radio, de signaler à une station mobile tout changement dans les ressources radio allouées à cette station mobile, notamment pour les raisons suivantes:
- ces systèmes ont généralement une architecture cellulaire, et des mécanismes sont alors prévus pour choisir en permanence une meilleure cellule serveuse et/ou un meilleur réseau serveur, tels que notamment les mécanismes de transfert intercellulaire (ou « handover ») ou les mécanismes de sélection ou de re-sélection de cellule, le choix d'une meilleure cellule pouvant être effectué par les stations mobiles et/ou par le réseau, selon les mécanismes considérés; en outre ces systèmes utilisent généralement la technique de transmision en macro-diversité (ou « soft-handover ») selon laquelle une station mobile peut être connectée simultanément à plusieurs stations de base, l'ensemble de stations de base auquel la station mobile est connectée étant aussi appelé ensemble actif, ou "active set" en anglais),
- dans ces systèmes les ressources radio sont généralement allouées de manière flexible aux utilisateurs en fonction des services requis et en fonction de divers autres facteurs tels que notamment les conditions radio et/ou de trafic rencontrées ; en outre ces systèmes ont généralement une organisation en couches qui conduit à distinguer différents niveaux possibles d'allocation de ressources radio pour les différentes opérations d'établissement, de reconfiguration ou de relâchement d'une connexion (par exemple, dans l'UMTS, à distinguer des canaux physiques (ou « physical channels »), des canaux de transport (ou « transport channels »), et des supports radio (ou « radio bearers»)).

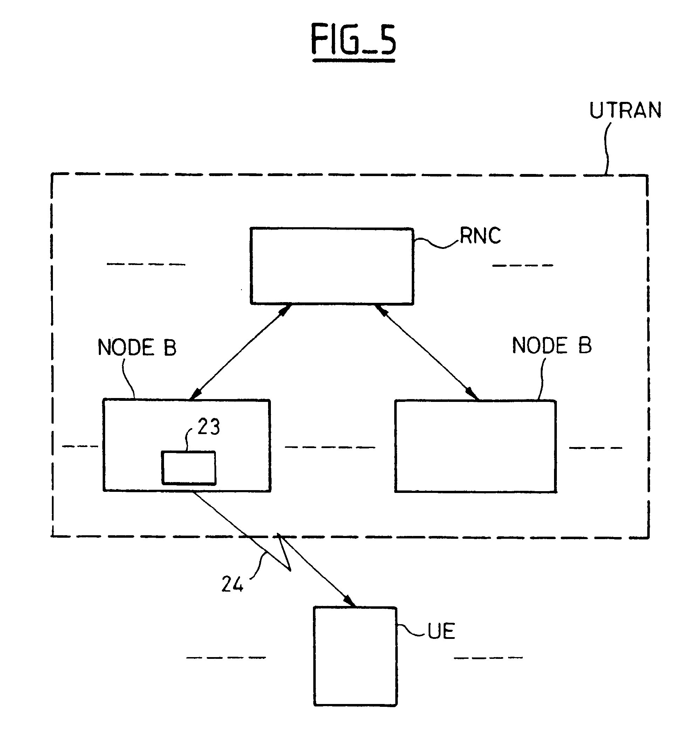

Suivant un deuxième exemple, l'antenne d'émission allouée dans le mode sans diversité est sélectionnée par le Node B, comme illustré en 23 sur la figure 5, et signalée à l'UE, comme illustré en 24 sur la figure 5.

La signalisation de Node B vers UE utilise alors le protocole de communication correspondant entre Node B et UE, ou protocole de couche 1 (ce qui est plus coûteux en termes de signalisation).

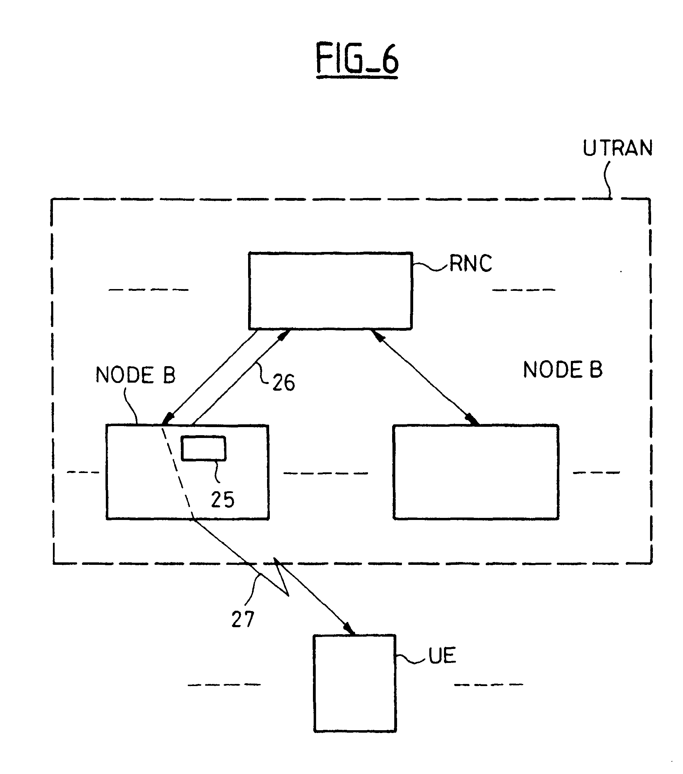

Suivant un troisième exemple, l'antenne d'émission allouée dans le mode sans diversité est sélectionnée par le Node B, comme illustré en 25 sur la figure 6, signalée ensuite au RNC, comme illustré en 26 sur la figure 6, puis signalée ensuite par le RNC à l'UE, comme illustré en 27 sur la figure 6.

La signalisation de Node B vers RNC peut utiliser un message de signalisation prévu selon le protocole de communication correspondant entre Node B et RNC, ou protocole NBAP (pour « Node B Application Part »). La signalisation de RNC vers UE peut utiliser un message de signalisation prévu selon le protocole de communication correspondant entre RNC et UE, ou protocole RRC (pour « Radio Resource Control »).

Dans ce cas, la procédure pourrait se dérouler comme suit : si dans un message le RNC indique au Node B le mode de diversité utilisé pour un certain lien radio, alors le Node B indique au RNC quelle antenne d'émission est sélectionnée, dans le message de réponse au RNC. Notamment, pour le protocole NBAP, un tel message du Node B au RNC peut être un des messages suivants:
- Radio Link Setup Response
- Radio Link Reconfiguration Ready.

Dans le premier ou le troisième exemple, le RNC a une connaissance des différentes communications établies via un Node B qu'il contrôle, et des services requis pour ces différentes communications. Le RNC peut également avoir connaissance de certains paramètres caractéristiques de l'amplificateur de puissance associé à chaque antenne d'émission de ce Node B, tels que notamment la puissance maximale d'émission de cet amplificateur (éventuellement, le Node B peut signaler au RNC des informations relatives à de tels paramètres caractéristiques, de telles informations pouvant en effet être plus facilement connues du Node B) . Le RNC peut donc sélectionner une antenne d'émission pour chaque UE de manière à éviter les inconvénients mentionnés précédemment, c'est-à-dire de manière à répartir le mieux possible les puissances émises entre les différentes antennes d'émission, ou encore de manière à éviter qu'une valeur maximale de puissance d'émission soit atteinte plus tôt pour une antenne d'émission que pour une autre.

Dans le deuxième exemple, le Node B peut également sélectionner une antenne d'émission pour chaque UE de manière à éviter les inconvénients mentionnés précédemment, c'est-à-dire de manière à répartir le mieux possible les puissances émises entre les différentes antennes d'émission, ou encore de manière à éviter qu'une valeur maximale de puissance d'émission soit atteinte plus tôt pour une antenne d'émission que pour une autre.

Bien que la description qui précède ait été faite plus particulièrement à titre d'exemple pour le cas des valeurs N=2 et n=1 (correspondant à un système à deux antennes d'émission dans lequel est prévu un mode sans diversité) l'invention n'est pas limitée à un tel exemple.

La description qui précède peut notamment être généralisée au cas de valeurs N>2 et n=1 (correspondant à un système à N antennes d'émission dans lequel est prévu un mode sans diversité). Suivant les principes décrits précédemment, on peut ainsi prévoir que le réseau signale à une station mobile l'antenne d'émission sélectionnée parmi N pour la transmission vers cette station mobile dans le mode sans diversité. On peut en outre prévoir que la station mobile sélectionne un canal pilote commun associé à une antenne d'émission sélectionnée, signalée par le réseau.

La description qui précède peut également être généralisée au cas de valeurs N>n et n>1 (correspondant à un système à N antennes d'émission dans lequel est prévu un mode avec diversité à « n » antennes d'émission). Suivant les principes décrits précédemment, on peut ainsi prévoir que le réseau signale à une station mobile « n » antennes d'émission sélectionnées parmi N pour la transmission vers cette station mobile dans un mode à « n » antennes d'émission. On peut ainsi prévoir, par exemple dans le cas de valeurs N>2 et n=2, que le réseau signale à une station mobile les deux antennes d'émission sélectionnées parmi N pour la transmission vers cette station mobile dans un mode avec diversité à deux antennes d'émission. On peut en outre prévoir que la station mobile sélectionne un canal pilote commun associé à une antenne d'émission sélectionnée, signalée par le réseau. D'une manière générale, le type de situation visée par la présente invention (à savoir une situation dans laquelle certaines stations mobiles sont dans un mode de diversité à « n » antennes, alors que d'autres stations mobiles sont dans un mode de diversité à N antennes) peut se produire pour différentes raisons, telles par exemple:
- certaines stations mobiles pourraient ne pas supporter de mode de diversité à N antennes, mais supporter seulement un mode de diversité à « n » antennes,
- dans certains cas, les performances peuvent être meilleures dans un mode de diversité à « n » antennes que dans un mode avec diversité à N antennes,
- certaines stations mobiles peuvent être dans une configuration de macro-diversité (ou « soft handover ») avec au moins une station de base qui ne supporte pas la diversité à N antennes d'émission mais seulement la diversité à « n » antennes d'émission; dans ce cas, il pourrait être prévu que ces stations mobiles n'utilisent pas la diversité à N antennes d'émission, alors que les stations mobiles qui sont connectées seulement à des stations de base qui supportent la diversité d'antennes à N antennes émission pourraient l'utiliser.

## Revendications

1. Procédé pour améliorer les performances d'un système de radiocommunications mobiles à N antennes d'émission (1, 2), avec N > 1, dans lequel différents modes de diversité d'antennes d'émission sont possibles, incluant au moins un mode dit à « n » antennes d'émission, avec 1 ≤ n < N, ledit procédé comportant une étape de sélection de « n » antennes d'émission parmi N pour la transmission dans un mode à « n » antennes d'émission.

2. Procédé selon la revendication 1, comportant une étape selon laquelle le réseau sélectionne « n » antennes d'émission parmi N, avec 1 ≤ n < N, pour la transmission vers une station mobile dans un mode à « n » antennes d'émission.

3. Procédé selon la revendication 2, comportant en outre une étape selon laquelle le réseau signale à une station mobile « n » antennes d'émission sélectionnées parmi N, avec 1 ≤n < N, pour la transmission vers cette station mobile dans un mode à « n » antennes d'émission.

4. Procédé selon l'une des revendications 1 à 3, dans lequel ladite sélection de « n » antennes d'émission parmi N, avec 1 ≤n < N, est effectuée de manière à répartir le mieux possible les puissances émises sur les différentes antennes d'émission.

5. Procédé selon l'une des revendications 2 à 4, dans lequel, un canal pilote commun étant associé à chaque antenne d'émission, ledit procédé comporte en outre une étape selon laquelle une station mobile sélectionne un canal pilote commun associé à une antenne d'émission sélectionnée signalée par le réseau.

6. Procédé selon l'une des revendications 1 à 5, dans lequel ladite sélection correspond à une sélection d'une antenne d'émission parmi N, pour la transmission dans un mode dit sans diversité.

7. Station de base (NODE B) pour système de radiocommunications mobiles à N antennes d'émission (1, 2) , avec N > 1, dans lequel différents modes de diversité d'antennes d'émission sont possibles, incluant au moins un mode dit à « n » antennes d'émission, avec 1 ≤ n < N, ladite station de base comportant des moyens (23, 25) pour sélectionner « n » antennes d'émission parmi N, pour la transmission vers une station mobile dans un mode à « n » antennes d'émission.

8. Station de base selon la revendication 7, comportant des moyens pour sélectionner « n » antennes d'émission parmi N, avec 1 ≤ n < N, de manière à répartir le mieux possible les puissances émises sur les différentes antennes d'émission.

9. Station de base selon l'une des revendications 7 et 8, comportant en outre des moyens pour signaler à la station mobile « n » antennes d'émission parmi N, avec 1 ≤ n < N, ainsi sélectionnées.

10. Station de base selon l'une des revendications 7 et 8, comportant en outre des moyens pour signaler à un contrôleur de stations de base « n » antennes d'émission parmi N, avec 1 ≤n < N, ainsi sélectionnées.

11. Station de base selon l'une des revendications 7 à 10, dans laquelle ladite sélection correspond à une sélection d'une antenne d'émission parmi N, pour la transmission dans un mode dit sans diversité.

12. Contrôleur de stations de base (RNC) pour système de radiocommunications mobiles à N antennes d'émission, avec N > 1, dans lequel différents modes de diversité d'antennes d'émission sont possibles, incluant au moins un mode dit à « n » antennes d'émission (1, 2), avec 1 ≤ n < N, ledit contrôleur de stations de base comportant :
- des moyens pour recevoir d'une station de base une information relative à « n » antennes d'émission sélectionnées parmi N, avec 1 ≤n < N, par cette station de base, pour la transmission vers une station mobile dans un mode à « n » antennes d'émission,
- des moyens pour signaler à la station mobile « n » antennes d'émission ainsi sélectionnées.

13. Contrôleur de stations de base (RNC) pour système de radiocommunications mobiles à N antennes d'émission (1, 2), avec N > 1, dans lequel différents modes de diversité d'antennes d'émission sont possibles, incluant au moins un mode dit à « n » antennes d'émission, avec 1 ≤n < N, ledit contrôleur de stations de base comportant des moyens (20) pour sélectionner « n » antennes d'émission parmi N (avec 1 ≤n < N), pour la transmission vers une station mobile dans un mode à « n » antennes d'émission.

14. Contrôleur de stations de base selon la revendication 13, comportant des moyens pour sélectionner « n » antennes d'émission parmi N, avec 1 ≤n < N, de manière à répartir le mieux possible les puissances émises sur les différentes antennes d'émission.

15. Contrôleur de stations de base selon l'une des revendications 13 et 14, comportant en outre des moyens pour signaler à la station mobile n antennes d'émission ainsi sélectionnées parmi N, avec 1 ≤n < N.

16. Contrôleur de stations de base selon l'une des revendications 12 à 15, dans lequel ladite sélection correspond à une sélection d'une antenne d'émission parmi N, pour la transmission dans un mode dit sans diversité.

17. Station mobile (UE) pour système de radiocommunications mobiles à N antennes d'émission (1, 2), avec N > 1, dans lequel différents modes de diversité d'antennes d'émission sont possibles, incluant au moins un mode dit à « n » antennes d'émission, avec 1 ≤n < N, ladite station mobile comportant des moyens pour recevoir du réseau une information relative à « n » antennes d'émission sélectionnées parmi N, avec 1 ≤n < N, pour la transmission vers cette station mobile dans un mode à « n » antennes d'émission.

18. Station mobile selon la revendication 17, comportant en outre des moyens pour sélectionner un canal pilote commun associé à une antenne d'émission sélectionnée signalée par le réseau.

19. Station mobile selon l'une des revendications 17 et 18, dans laquelle ladite sélection correspond à une sélection d'une antenne d'émission parmi N, pour la transmission dans un mode dit sans diversité.

20. Système de radiocommunication mobiles comportant au moins une station de base (NODE B) selon l'une des revendications 7 à 11, et/ou au moins un contrôleur de stations de base (RNC) selon l'une des revendications 12 à 16, et/ou au moins une station mobile (UE) selon l'une des revendications 17 à 19.

## Patentansprüche

1. Verfahren zur Verbesserung der Leistungen eines Mobilfunkkommunikationssystems mit N Sendeantennen (1, 2) mit N > 1, in dem verschiedene Sendeantennendiversitätsmodi möglich sind, einschließlich mindestens ein Modus, der als Modus mit "n" Sendeantennen bezeichnet wird, mit 1 ≤n< N, wobei dieses Verfahren einen Schritt zur Auswahl von "n" Sendeantennen unter N für die Übertragung in einem Modus mit "n" Sendeantennen enthält.

2. Verfahren gemäß Anspruch 1, das einen Schritt enthält, gemäß dem das Netz "n" Sendeantennen aus N, mit 1 ≤n < N, auswählt, für die Übertragung zu einer Mobilstation in einem Modus mit "n" Sendeantennen.

3. Verfahren gemäß Anspruch 2, das außerdem einen Schritt enthält, gemäß dem das Netz einer Mobilstation "n" Sendeantennen meldet, die unter N, mit 1 ≤n < N, ausgewählt wurden, für die Übertragung zu dieser Mobilstation in einem Modus mit "n" Sendeantennen.

4. Verfahren gemäß einem der Ansprüche 1 bis 3, bei dem diese Auswahl von "n" Sendeantennen aus N, mit I ≤n < N, sn erfolgt, dass die Sendeleistungen auf den verschiedenen Sendeantennen bestmöglich verteilt werden.

5. Verfahren gemäß einem der Ansprüche 2 bis 4, bei dem da ein gemeinsamer Steuerkanal mit jeder Sendeantenne verknüpft ist, dieses Verfahren außerdem einen Schritt beinhaltet, gemäß dem eine Mobilstation einen gemeinsamen Steuerkanal auswählt, der mit einer ausgewählten Sendeantenne, die vom Netz gemeldet wird, verknüpft ist.

6. Verfahren gemäß einem der Ansprüche 1 bis 5, bei dem diese Auswahl dem Auswählen einer Sendeantenne aus N entspricht, für die Übertragung in einem Modus, der als s Modus ohne Diversität bezeichnet wird.

7. Basisstation (NODE B) für Mobilfunkkommunikationssystem mit N Sendeantennen (1, 2), mit N > 1, in dem verschiedene Sendeantennendiversitätsmodi möglich sind, einschließlich mindestens ein Modus, der als Modus mit "n" Sendeanntennen bezeichnet wird, mit 1 ≤n <N, wobei diese Basisstation Mittel (23, 25) enthält, um "n" Sendeantennen aus N auszuwählen, für die Übertragung zu einer Mobilstation in einem Modus mit "n" Sendeantennen.

8. Basisstation gemäß Anspruch 7, die Mittel enthält, um "n" Sendeantennen aus N, mit 1 ≤n < N, auszuwählen, so dass die Sendeleistungen auf den verschiedenen Sendeantennen bestmöglich verteilt werden.

9. Basisstation gemäß einem der Ansprüche 7 und 8, die außerdem Mittel enthält, um der Mobilstation "n" Sendeantennen aus N, mit 1 ≤n < N, zu melden, die so ausgewählt wurden.

10. Basisstation gemäß einem der Ansprüche 7 und 8, die außerdem Mittel enthält, um einem Basisstationcontroller "n" Sendeantennen aus N, mit 1 ≤n < N, zu melden, die so ausgewählt wurden.

11. Basisstation gemäß einem der Ansprüche 7 bis 10, bei der diese Auswahl dem Auswählen einer Sendeantenne aus N entspricht, für die Übertragung in einem Modus, der als Modus ohne Diversität bezeichnet wird.

12. Basisstationcontroller (RNC) für Mobilfunkkommunikationssysteme mit N Sendeantennen, mit N > 1, bei dem verschiedene Sendeantennendiversitätsmodi möglich sind, einschließlich mindestens ein Modus, der als Modus mit "n" Sendeantennen (1, 2), mit 1 ≤n < N, bezeichnet wird, wobei dieser Basisstationcontroller folgendes enthält:
- Mittel, um von einer Basisstation eine Information betreffend "n" Sendeantennen, die von dieser Basisstation unter N, mit 1 ≤n < N, ausgewählt wurden, zu empfangen, für die Übertragung zu einer Mobilstation in einem Modus mit "n" Sendeantennen,
- Mittel, um der Mobilstation "n" so aus N ausgewählte Sendeantennen zu melden.

13. Basisstationcontroller (RNC) für Mobilfunkkommunikationssystem mit N Sendeantennen (1,2), mit N > 1, bei dem verschiedene Sendeantennendiversitätsmodi möglich sind, einschließlich mindestens ein Modus, der als Modus mit "n" Sendeantennen, mit 1 ≤n < N, bezeichnet wird, wobei dieser Basisstationcontroller Mittel (20) enthält, um "n" Sendeantennen aus N (mit 1 ≤n < N) für die Übertragung zu einer Mobilstation in einem Modus mit "n" Sendeantennen auszuwählen.

14. Basisstationcontroller gemäß Anspruch 13, der Mittel enthält zum Auswählen von "n" Sendeantennen aus N, mit 1 ≤n < N, so dass die Sendeleistungen auf den verschiedenen Sendeantennen bestmöglich verteilt werden.

15. Basisstationcontroller gemäß einem der Ansprüche 13 und 14, der außerdem Mittel enthält, um der Mobilstation "n" Sendeantennen aus N, mit 1 ≤n < N, zu melden, die so ausgewählt wurden.

16. Basisstationcontroller gemäß einem der Ansprüche 12 bis 15, bei dem diese Auswahl dem Auswählen einer Sendeantenne aus N entspricht, für die Übertragung in einem Modus, der als Modus ohne Diversität bezeichnet wird.

17. Mobilstation (UE) für Mobilfunkkommunikationssystem mit N Sendeantennen (1, 2), mit N > 1, bei dem verschiedene Sendeantermendiversitätsmodi möglich sind, einschließlich mindestens ein Modus, der als Modus mit "n" Sendeantennen, mit 1 ≤n < N, bezeichnet wird, wobei diese Mobilstation Mittel enthält, um vom Netz eine Information betreffend "n" Sendeantenne, die unter N ausgewählt wurden, mit 1 ≤n < N, zu empfangen, für die Übertragung zu dieser Mobilstation in einem Modus mit "n" Sendeantennen.

18. Mobilstation gemäß Anspruch 17, die außerdem Mittel enthält, um einen gemeinsamen Steuerkanal auszuwählen, der mit einer vom Netz gemeldeten Sendeantenne verknüpft ist.

19. Mobilstation gemäß einem der Ansprüche 17 und 18, bei der diese Auswahl dem Auswählen einer Sendeantenne aus N, für die Übertragung in einem Modus, der als Modus ohne Diversität bezeichnet wird, entspricht.

20. Mobilfunkkommunikationssystem, das mindestens eine Basisstation (NODE B) gemäß einem der Ansprüche 7 bis 11 enthält, und/oder mindestens einen Basisstationcontroller (RNC) gemäß einem der Ansprüche 12 bis 16, und/oder mindestens eine Mobilstation (UE) gemäß einem der Ansprüche 17 bis 19.

## Claims

1. Method of improving the performance of a mobile radio system with N transmit antennas (1, 2) (where N > 1) in which different transmit antenna diversity modes are possible, including at least one mode with "n" transmit antennas (where 1 ≤n < N), said method comprising a step of selecting "n" transmit antennas from the N transmit antennas for transmission in a mode with "n" transmit antennas.

2. Method according to claim 1, comprising a step in which the network selects "n" transmit antennas from the N transmit antennas (where 1 ≤n < N) for the transmission to a mobile station in a mode with "n" transmit antennas.

3. Method according to claim 2, further comprising a step in which the network signals to a mobile station the "n" transmit antennas selected from the N transmit antennas (where 1 ≤n < N) for the transmission to that mobile station in a mode with "n" transmit antennas.

4. Method according to any of claims 1 to 3, wherein said "n" transmit antennas are selected from the N transmit antennas (where 1 ≤n < N) in such a manner as to distribute the transmitted powers optimally between the various transmit antennas.

5. Method according to any of claims 2 to 4, wherein, a common pilot channel being associated with each transmit antenna, said method further comprises a step in which a mobile station selects a common pilot channel associated with a selected transmit antenna as signalled by the network.

6. Method according to any of claims 1 to 5, wherein said selection corresponds to the selection of one of N transmit antennas for the transmission in a no-diversity mode.

7. Base station (NODE B) for a mobile radio system with N transmit antennas (1, 2) (where N > 1) in which different transmit antenna diversity modes are possible, including at least one mode with "n" transmit antennas (where 1 ≤n < N), said base station comprising means (23, 25) for selecting "n" transmit antennas from the N transmit antennas for transmission to a mobile station in a mode with "n" transmit antennas.

8. Base station according to claim 7, comprising means for selecting "n" transmit antennas from the N transmit antennas (where 1 ≤n < N) in such a manner as to distribute the transmitted powers optimally between the various transmit antennas.

9. Base station according to either claim 7 or claim 8, further comprising means for signalling to the mobile station "n" transmit antennas from the N transmit antennas selected in the above way (where 1 ≤n < N).

10. Base station according to either claim 7 or claim 8, further comprising means for signalling to a base station controller "n" transmit antennas from the N transmit antennas (where 1 sn < N) selected in the above way.

11. Base station according to any of claims 7 to 10, wherein said selection corresponds to the selection of one of N transmit antennas for the transmission in a no-diversity mode.

12. Base station controller (RNC) for a mobile radio system with N transmit antennas (where N > 1) in which different transmit antenna diversity modes are possible, including at least one mode with "n" transmit antennas (1, 2) (where 1 ≤ n < N), said base station controller comprising:
- means for receiving from a base station information relating to "n" transmit antennas selected from the N transmit antennas (where 1 ≤n < N) by that base station for the transmission to a mobile station in a mode with "n" transmit antennas, and
- means for signalling to the mobile station "n" transmit antennas selected in the above way.

13. Base station controller (RNC) for a mobile radio system with N transmit antennas (1, 2) (where N > 1) in which different transmit antenna diversity modes are possible, including at least one mode with "n" transmit antennas (where 1 ≤n < N), said base station controller comprising means (20) for selecting "n" transmit antennas from the N transmit antennas (where 1 ≤n < N) for the transmission to a mobile station in a mode with "n" transmit antennas.

14. Base station controller according to claim 13, comprising means for selecting "n" transmit antennas from the N transmit antennas (where 1 ≤n < N) in such a manner as to distribute the transmitted powers optimally between the various transmit antennas.

15. Base station controller according to either claim 13 or claim 14, further comprising means for signalling to the mobile station the n transmit antennas selected in the above way from the N transmit antennas (where 1 ≤n < N).

16. Base station controller according to any of claims 12 to 15, wherein said selection corresponds to the selection of one of N transmit antennas for transmission in a no-diversity mode.

17. Mobile station (UE) for a mobile radio system with N transmit antennas (1, 2) (where N > 1) in which different transmit antenna diversity modes are possible, including at least one mode with "n" transmit antennas (where 1 ≤n < N), said mobile station comprising means for receiving from the network information relating to "n" transmit antennas selected from the N transmit antennas (where 1 ≤n < N) for transmission to that mobile station in a mode with "n" transmit antennas.

18. Mobile station according to claim 17, further comprising means for selecting a common pilot channel associated with a selected transmit antenna as signalled by the network.

19. Mobile station according to either claim 17 or claim 18, wherein said selection corresponds to the selection of one of N transmit antennas for the transmission in a no-diversity mode.

20. Mobile radio system comprising at least one base station (NODE B) according to any of claims 7 to 11 and/or at least one base station controller (RNC) according to any of claims 12 to 16 and/or at least one mobile station (UE) according to any of claims 17 to 19.
